# EUROPÄISCHE PATENTSCHRIFT

(11) **EP 1 723 750 B1**
(45) Veröffentlichungstag und Bekanntmachung des Hinweises auf die Patenterteilung: **14.01.2009**
(21) Anmeldenummer: 05701292.4
(22) Anmeldetag: 01.02.2005
(51) Int. Cl.: H04L 12/43

(54) **Verfahren zur Datenkommunikation**
Method for data communication
Procédé de communications de données

(30) Priorität: 11.03.2004 DE 102004011946
(43) Veröffentlichungstag der Anmeldung: 22.11.2006
(73) Patentinhaber: Bayerische MotorenWerke Aktiengesellschaft, 80809 München (DE)
(72) Erfinder: KRAMMER, Josef, 83607 Holzkirchen (DE); HOLZMANN, Bettina, 80797 München (DE); OLENDER, Grzegorz, 81369 München (DE); SCHEDL, Anton, 80798 München (DE); STEMMELEN, Lucien, 86577 Sielenbach (DE)
(74) Vertreter: Bullwein, Fritz
(86) Internationale Anmeldenummer: PCT/EP2005/000977
(87) Internationale Veröffentlichungsnummer: WO 2005/088910

(56) Entgegenhaltungen:
- WO-A-03/056764
- HANSSON H ET AL: "BASEMENT: AN ARCHITECTURE AND METHODOLOGY FOR DISTRIBUTED AUTOMOTIVE REAL-TIME SYSTEMS" IEEE TRANSACTIONS ON COMPUTERS, IEEE INC. NEW YORK, US, Bd. 46, Nr. 9, September 1997 (1997-09), Seiten 1016-1027, XP000701861 ISSN: 0018-9340
- ROSTAMZADEH B ET AL: "DACAPO: a distributed computer architecture for safety-critical control applications" INTELLIGENT VEHICLES '95 SYMPOSIUM., PROCEEDINGS OF THE DETROIT, MI, USA 25-26 SEPT. 1995, NEW YORK, NY, USA,IEEE, US, 25. September 1995 (1995-09-25), Seiten 376-381, XP010194147 ISBN: 0-7803-2983-X

## Beschreibung

Die vorliegende Erfindung betrifft ein Verfahren zur Durchführung einer zyklischen und konfliktfreien Datenkommunikation der Teilnehmer eines Datenbusses, die in nicht überlappenden Zeiträumen innerhalb eines Teilnehmerzyklusintervalls Daten senden und Aufgaben bearbeiten, und denen in einer Planungsphase feste Sendezeitschlitze innerhalb des Teilnehmerzyklusintervalls zugeteilt werden.

Ein solches Verfahren ist bekannt aus den Schriften Hansson H. et al., "BASEMENT: an architecture and methodology for distributed automotive real-time systems", IEEE Transactions on Computers, vol. 46, no. 9, September 1997, pp. 1016-1027, und Rostamzadeh B. et al., "DACAPO: a distributed computer architecture for safety-critical control applications", Proceedings of the Detroit Intelligent Vehicles '95 Symposium, MI, USA, 25-26 September 1995, pp. 376-381.

Zeitgesteuerte Datenbusse finden zunehmend Verwendung in Kraftfahrzeugen und anderen Verkehrsmitteln (z. B. Flugzeugen, Zügen, Schiffen). Sie werden bevorzugt gegenüber ereignisgesteuerten Datenbussen verwendet in Fällen, in denen sicherheitsrelevante Daten in regelmäßigen Abständen mit hoher Zuverlässigkeit und geringer zeitlicher Schwankung (Jitter) zwischen Steuergeräten ausgetauscht werden sollen. Ein großer Vorteil zeitgesteuerter Datenbusse im Hinblick auf die Gewährleistung solcher Eigenschaften liegt darin, dass hier eine dauerhafte Belegung des Datenbusses, etwa durch die Fehlfunktion eines Steuergerätes, ausgeschlossen ist.

Aus der DE 102 00 201 A1 ist ein Verfahren zur Kommunikation verschiedener Teilnehmer über einen zeitgesteuerten Datenbus bekannt. In dem Verfahrens versenden die Teilnehmer zyklisch in festgelegten Sendezeitschlitzen Nachrichten über den Datenbus. Die Zeitperiode für das Senden einer Nachricht, im Folgenden Teilnehmerzykluszeit genannt, kann dabei gleich der Buszykluszeit, d. h. der Länge eines Buszyklusintervalls, sein. Ein Sendezeitschlitz kann aber auch in unterschiedlichen Buszyklusintervallen durch unterschiedliche Teilnehmer genutzt werden, wodurch die Teilnehmerzykluszeit gegenüber der Buszykluszeit erhöht wird. Ebenso kann die Teilnehmerzykluszeit nach dem Stand der Technik verringert werden. Dies geschieht, indem mehrere Sendezeitschlitze innerhalb eines Buszyklusintervalls mit derselben Nachricht belegt werden.

Nach dem Stand der Technik wird für ein Zeitintervall, innerhalb dessen sich sämtliche über den Datenbus gesendeten Nachrichten wiederholen, durch ein Scheduling-Verfahren systemweit ein zeitlicher Ablauf (Schedule) festgelegt, in welchem die Funktionsabhängigkeiten aller Teilnehmer berücksichtigt sind und alle Teilnehmer konfliktfrei in jeweils strikt festgelegten Sendezeitschlitzen über den Datenbus kommunizieren. In diesem Scheduling-Verfahren werden abgestimmt auf die Sendezeitschlitze auch die Applikationszeiträume festgelegt. Die Konfiguration der Steuergeräte für die jeweiligen Applikationszeiträume kann zeitlich absolut erfolgen oder relativ auf die Sendezeitschlitze bezogen.

Durch eine solche Festlegung entsteht oft eine enge Verzahnung zwischen Sendezeitschlitzen und Applikationszeiträumen mehrerer Teilnehmer. Diese Verzahnung wiederum führt dazu, dass eine starke zeitliche Abhängigkeit zwischen den Applikationen verschiedener Teilnehmer entsteht. Werden nun funktionale Änderungen oder ein Austausch eines Steuergerätes vorgenommen, kann es vorkommen, dass der Schedule verändert werden muss. Durch die genannte Abhängigkeit beziehen sich solche Änderungen des Schedule oft nicht nur auf einzelne Teilnehmer, sondern auf mehrere durch eine kausale Kette miteinander verknüpfte Teilnehmer. Von einer einzigen funktionalen Änderung können somit mehrere Teilnehmer und Steuergeräte betroffen sein.

Im Entwicklungsbereich vieler Industriezweige, etwa der Kraftfahrzeugindustrie, wo jegliche Veränderung sicherheitsrelevanter Applikationen strengen Kontrollen unterliegt, ist mit jeder Geräteänderung ein aufwändiger Zertifizierungsprozess verbunden. Das Durchlaufen jedes Zertifizierungsprozesses stellt einen Wartezustand innerhalb des Entwicklungsprozesses dar und führt in der Regel zu einer Verlängerung der Entwicklungsdauer und einer Erhöhung der Entwicklungskosten eines Gerätes und von diesem Gerät abhängiger Baugruppen.

Wie oben geschildert, bedingt die Änderung eines Steuergerätes häufig die zertifizierungspflichtige Änderung weiterer Steuergeräte, wenn Kommunikation und Applikation in einem Bussystem, wie es dem Stand der Technik entspricht, stark miteinander verkoppelt sind. Zudem ist durch Verfahren nach dem Stand der Technik die Einsetzbarkeit eines zertifizierten Steuergerätes in der Regel auf ein einziges Bussystem Beschränkt. Soll ein Steuergerät in unterschiedlichen Bussystemen eingesetzt werden, in welche es aus funktionaler Sicht integrierbar ist, können ihm in der Regel nicht in allen Bussystemen die gleichen Sendezeitschlitze zugewiesen werden. Hierdurch ergeben sich nach dem Stand der Technik für die zu diesem Steuergerät gehörigen Teilnehmer in unterschiedlichen Bussystemen meist unterschiedliche Applikationszeiträume. Jede der sich dadurch ergebenden unterschiedlichen Varianten des Steuergerätes muss eigens einen Zertifizierungsprozess durchlaufen.

Aufgabe der Erfindung ist es, ein Verfahren zu schaffen, durch welches die Anzahl notwendiger Zertifizierungsmaßnahmen im Zusammenhang mit dem Austausch und Änderungen einzelner Steuergeräte eines zeitgesteuerten Datenbusses reduziert wird.

Die Erfindung löst diese Aufgabe, indem der Schedule verschiedener Teilnehmer durch die systematische Nutzung zeitlicher Reserven voneinander entkoppelt wird. Erreicht wird dies, indem die Sendezeitschlitze und Applikationszeiträume jedes einzelnen Teilnehmers in disjunkten (d. h. nicht überlappenden) funktionsbezogenen Zeitintervallen unabhängig voneinander festgelegt werden. Innerhalb dieser funktionsbezogenen Zeitintervalle können Sendezeitschlitze und Applikationszeiträume dann flexibel festgelegt und modifiziert werden, ohne sich gegenseitig zu beeinflussen.

Der wichtigste Vorteil der Erfindung besteht darin, dass durch diese Entkopplung von Sende- und Applikationszeiten ein Steuergerät von Änderungen in anderen Steuergeräten unberührt bleibt, solange diese innerhalb der jeweiligen funktionsbezogenen Zeitintervalle stattfinden. Die Mehrzahl funktionaler Änderungen während des Entwicklungsprozesses eines verteilten Bussystems wirkt sich unter Anwendung der Erfindung also nur auf ein einziges Gerät aus. Ebenso kann unter Anwendung der Erfindung ein zertifiziertes Steuergerät ohne eine Neukonfiguration flexibel in unterschiedlichen Bussystemen eingesetzt werden. Durch beide genannte Konsequenzen kann die Anzahl notwendiger Zertifizierungsmaßnahmen erheblich gesenkt werden. Diese Senkung wird in vielen Fällen zu einer deutlichen Verringerung sowohl der Entwicklungsdauer als auch der Entwicklungskosten für zeitgesteuerte Bussysteme führen.

### Der wesentliche Gedanke der Erfindung lässt sich wie folgt beschreiben:

Die Datenkommunikation über einen zeitgesteuerten Datenbus erfolgt innerhalb sich zyklisch wiederholender Buszyklusintervalle. Die Länge dieser Buszyklusintervalle wird im Folgenden als Buszykluszeit bezeichnet. Zur exakteren Festlegung von Zeiträumen für den Nachrichtenaustausch innerhalb des Buszyklusintervalls ist dieses in einzelne Sendezeitschlitze unterteilt.

Angeschlossen an einen solchen zeitgesteuerten Datenbus sind in der Regel verschiedene Steuergeräte, die zur Steuerung, Regelung oder Überwachung von Antriebs-, Sicherheits- oder Komfortmaßnahmen dienen. Die Steuergeräte tauschen über den Datenbus in zyklischer Abfolge Nachrichten aus und verarbeiten diese. Häufig umfasst das Kommunikationsverhalten eines Steuergerätes an einem zeitgesteuerten Datenbus das zyklische Empfangen und Versenden von mehr als einer Nachricht. Etwa wird häufig in einem ersten Schritt eine Nachricht empfangen, in einem zweiten Schritt der Inhalt der eingegangenen Nachricht verarbeitet und in einem dritten Schritt das Ergebnis der Verarbeitung als Nachricht gesendet. Oft ist ein einziges Steuergerät auch an mehreren kausalen Abfolgen solcher Art beteiligt.

Im Folgenden wird zunächst davon ausgegangen, dass ein Steuergerät einen oder mehrere logische Teilnehmer umfasst, bei welchen sich ein Sendeprozess und die Bearbeitung einer Aufgabe abwechseln und zyklisch wiederholen. Ebenso wird zunächst vorausgesetzt, dass Sendevorgang und Aufgabenbearbeitung in unterschiedlichen Zeiträumen stattfinden. Die Sendezeitschlitze eines Teilnehmers überlappen also nicht mit seinen Applikationszeiträumen.

Die Bearbeitung verschiedener Aufgaben durch ein Steuergerät wird dabei so auf die logischen Teilnehmer verteilt, dass jeder logische Teilnehmer einen zusammenhängenden Zeitraum für seine Aufgabenbearbeitung benötigt. Ebenso ist ein Zeitraum für den Sendeprozess vorzusehen. In diesem kann definitionsgemäß eine beliebige Anzahl von Nachrichten gesendet werden. Auf die praktische Umsetzbarkeit dieser Beschreibungsform sowie auf eine Erweiterung des Prinzips der Erfindung auf von dieser Definition abweichende Fälle wird an späterer Stelle eingegangen.

Für jeden Teilnehmer wird entsprechend den Anforderungen an die Häufigkeit seiner Kommunikation bzw. Aufgabenbearbeitung eine Teilnehmerzykluszeit festgelegt. Diese Teilnehmerzykluszeit kann prinzipiell sowohl ein Vielfaches als auch einen Bruchteil der Buszykluszeit betragen. Durch die mit der Erfindung verbundene Auflösung der engen zeitlichen Verzahnung von Sendezeitschlitzen und Applikationszeiträumen werden häufig Totzeiten in kausale Abfolgen eingebracht. Durch eine entsprechende Wahl der Teilnehmerzykluszeit können diese Totzeiten jedoch in aus funktionaler Sicht tolerierbaren Grenzen gehalten werden.

Innerhalb eines Teilnehmerzyklusintervalls, welches die Länge der Teilnehmerzykluszeit besitzt, liegen erfindungsgemäß zwei disjunkte funktionsbezogene Zeitintervalle, von denen eines, ein Sendezeitintervall, ausschließlich für das Senden von Nachrichten durch den Teilnehmer vorgesehen ist und eines, ein Applikationszeitintervall, ausschließlich für die Aufgabenbearbeitung des Teilnehmers. Zunächst wird davon ausgegangen, dass die Vereinigungsmenge beider funktionsbezogenen Zeitintervalle das gesamte Teilnehmerzyklusintervall überspannt. Für diesen Fall genügt prinzipiell auch die Definition eines einzigen Zeitintervalls, da sich das zweite Zeitintervall automatisch aus dem Teilnehmerzyklusintervall abzüglich des ersten Zeitintervalls ergibt. Um spätere Abweichungen von der hier vorgenommenen Einschränkung in gleicher Weise behandeln zu können, wird jedoch an der Definition zweier funktionsbezogener Zeitintervalle festgehalten.

Für die Festlegung der funktionsbezogenen Zeitintervalle sind folgende Voraussetzungen zu berücksichtigen:
- Die von jedem Teilnehmer für die bestimmungsgemäße Erfüllung der Aufgaben des Teilnehmers erforderliche Länge der Sendezeitschlitze in einem Teilnehmerzyklusintervall wird als bekannt vorausgesetzt. Die Länge des Sendezeitintervalls wird mindestens so groß gewählt, dass Sendezeitschlitze dieser Länge darin Platz finden.
- Ebenso wird die von jedem Teilnehmer für die bestimmungsgemäße Erfüllung seiner Aufgaben erforderliche Länge des Zeitraums für Aufgabenbearbeitung in einem Teilnehmerzyklusintervall als bekannt vorausgesetzt. Die Länge des Applikationszeitintervalls wird mindestens so groß gewählt, dass ein Zeitraum dieser Länge darin Platz findet.
- Aus Sicht eines Teilnehmers muss die Festlegung der funktionsbezogenen Zeitintervalle innerhalb des Teilnehmerzyklusintervalls so erfolgen, dass der Teilnehmer seine bestimmungsgemäße Aufgabe im Bussystem erfüllen kann, wenn die Lage seiner Sendezeitschlitze flexibel innerhalb des Sendezeitintervalls und die Lage des Applikationszeitraums flexibel innerhalb des Applikationszeitintervalls gewählt wird.
- Sämtliche Teilnehmerzykluszeiten und Sendezeitintervalle müssen so festgelegt sein, dass es prinzipiell möglich ist, sämtliche Sendezeitschlitze sowohl konfliktfrei auf dem Datenbus als auch innerhalb des Sendezeitintervalls des jeweiligen Teilnehmers einzuplanen.

Wird das Applikationszeitintervall eines Teilnehmers größer als die Länge des Applikationszeitraums gewählt, besteht eine zeitliche Reserve für Änderungen der Applikation des Teilnehmers. Wird das Sendezeitintervall eines Teilnehmers größer als die Länge der Sendezeitschlitze gewählt, so hat dies eine höhere Flexibilität im globalen Sendezeit-Scheduling zur Folge. Sind alle oben genannten Bedingungen für verschiedene Längen von Sendezeit- und Applikationszeitintervallen erfüllt, so ist abzuwägen, welcher der genannten Vorteile maximiert werden soll, indem das Applikationszeitintervall oder das Sendezeitintervall möglichst groß gewählt wird.

In einer Planungsphase wählt zunächst ein systemweiter (globaler) Sendezeit-Scheduler die Sendezeitschlitze für alle Teilnehmer so, dass einerseits die Sendezeitschlitze eines Teilnehmers innerhalb des jeweiligen Sendezeitintervalls liegen und andererseits die Sendezeitschlitze aller Teilnehmer konfliktfrei auf dem Datenbus festgelegt sind.

Das Ergebnis des Sendezeit-Schedulings, die Zuteilung von Sendezeitschlitzen an die einzelnen Teilnehmer ("Slot-Assignment Table"), wird den Teilnehmern in einer nachfolgenden Initialisierungsphase mitgeteilt. Definitionsgemäß können alle Teilnehmer ihre bestimmungsgemäße Aufgabe im Bussystem erfüllen, wenn ihnen Sendezeitschlitze innerhalb des jeweiligen Sendezeitintervalls zugeteilt werden. Dies ist nach dem beschriebenen Scheduling-Verfahren gewährleistet.

Durch die Aufteilung in disjunkte funktionsbezogene Zeitintervalle sind die Applikationszeiträume unabhängig von den zugeteilten Sendezeitschlitzen. Das Applikations-Scheduling innerhalb des Applikationszeitintervalls betrifft somit nur den jeweiligen Teilnehmer und kann daher von diesem selbst (lokal) erledigt werden.

Wird ein Steuergerät nun so konzipiert, dass es nicht für die exakten vom Sendezeit-Scheduler festgelegten Sendezeitschlitze konfiguriert werden muss, sondern zu beliebigen Zeiten innerhalb eines Sendezeitintervalls zum Senden bereitsteht, so machen Änderungen im Sendezeit-Scheduling oder ein erneuter Ablauf der Planungsphase per se keine Änderung an den Teilnehmern selbst erforderlich. Lediglich Teilnehmer, deren Applikation inhaltlich verändert wurde, müssen geändert und gegebenenfalls neu zertifiziert werden. Dies ist in der Regel auch bei inhaltlicher Veränderung von ausgetauschten Nachrichten für alle beteiligten Teilnehmer der Fall, da von einer Änderung der Kommunikationsinhalte auch die Applikation der jeweiligen Teilnehmer betroffen ist.

Durch die entkoppelte Festlegung von Sendezeitschlitzen und Applikationszeiträumen kann die Zeitspanne zwischen dem Ende der Aufgabenbearbeitung und dem Beginn der Sendezeitschlitze eines Teilnehmers variieren. Dies stellt kein technisches Problem dar, wenn die zu sendenden Daten vom sendenden Teilnehmer z. B. am Ende der Aufgabenbearbeitung, somit spätestens zum Ende des Applikationszeitintervalls und hiermit wiederum spätestens zu Beginn des Sendezeitintervalls, an eine Sendeeinheit übergeben werden.

Die Vorteile, die sich aus der Erfindung für die Entwicklung und den flexiblen Einsatz von Steuergeräten für zeitgesteuerte Datenbusse ergeben, werden im Folgenden geschildert.

Ein erster Vorteil der Erfindung liegt darin, dass sich zeitliche Änderungen im Applikations- oder Sendeverhalten eines Teilnehmers nicht auf andere Teilnehmer auswirken, sofern die Änderungen innerhalb der jeweiligen funktionsbezogenen Zeitintervalle stattfinden und alle bei der Festlegung der funktionsbezogenen Zeitintervalle genannten Voraussetzungen auch nach der Änderung erfüllt sind. Grund für solche Änderungen kann sein, dass die bisher vorgesehene Aufgabenbearbeitungszeit einzelner Teilnehmer nicht mehr zur Erfüllung der jeweiligen Aufgabe ausreicht oder dass größere Datenmengen übertragen werden müssen, wofür eine höhere als die bisher vorgesehene Anzahl von Sendezeitschlitzen benötigt wird. Nach einer solchen Veränderung an einem Teilnehmer müssen lediglich in einer neuen Planungsphase neue Sendezeitschlitze festgelegt und diese den Teilnehmern in einer neuen Initialisierungsphase mitgeteilt werden. Es sind keine Änderungen an anderen Teilnehmern und Steuergeräten erforderlich.

Ein weiterer Vorteil der Erfindung liegt darin, dass zertifizierte Steuergeräte ohne Modifikation in unterschiedlichen Bussystemen zum Einsatz kommen können, sofern für jedes Bussystem Alle bei der Festlegung der funktionsbezogenen Zeitintervalle genannten Voraussetzungen erfüllt sind. Erfindungsgemäß müssen zum Einbringen eines Steuergeräts in ein Bussystem ebenfalls lediglich in einer Planungsphase Sendezeitschlitze festgelegt und diese den Teilnehmern in einer Initialisierungsphase mitgeteilt werden. Es müssen an keinem der Steuergeräte Änderungen vorgenommen werden.

Zudem können gemäß der Erfindung zertifizierte Steuergeräte ohne Modifikation in Bussystemen zum Einsatz kommen, die auch Steuergeräte mit nach dem Stand der Technik konzipierten Teilnehmern enthalten, bei welchen Sendezeitschlitze und Applikationszeiträume strikt festgelegt sind (Rückwärtskompatibilität). Dieser Fall lässt sich aus dem vorangehenden Fall als Spezialfall ableiten, in welchem das Sendezeitintervall jedes Teilnehmers genau die tatsächlich beanspruchten Sendezeitschlitze und das Applikationszeitintervall jedes Teilnehmers genau den Applikationszeitraum umfasst. Mit dieser Definition können, wie oben beschrieben und sofern alle bei der Festlegung der funktionsbezogenen Zeitintervalle genannten Voraussetzungen erfüllt sind, in einer Planungsphase Sendezeitschlitze für alle Teilnehmer festgelegt und diese den erfindungsgemäßen Teilnehmern in einer Initialisierungsphase mitgeteilt werden. Hierzu müssen an keinem der Steuergeräte Änderungen vorgenommen werden.

Da gemäß der Erfindung die Schnittstelle eines Teilnehmers am Datenbus durch seine Teilnehmerzykluszeit und sein Sendezeitintervall bestimmt ist, fördert die Einführung von Konventionen für eine solche Schnittstelle die Kompatibilität verschiedener Teilnehmer untereinander sowie die Entwicklung geeigneter Scheduling-Verfahren. Im Folgenden werden einige Konventionen vorgeschlagen.

Zur systematischen Umsetzung des Prinzips kann es vorteilhaft sein, Klassen von Teilnehmern zu bilden, von denen sich jede durch eine bestimmte Teilnehmerzykluszeit und eine bestimmte Festlegung des Sendezeitintervalls innerhalb des Teilnehmerzyklusintervalls auszeichnet.

Vorteilhaft ist die Festlegung der Klassen in solcher Art und Weise, dass orientiert an der Anzahl der Vertreter einer Teilnehmerklasse und deren Sendezeitbedarf eine gute Ausnutzung der Busbandbreite gegeben ist. Dies kann beispielsweise erreicht werden, wenn die Teilnehmerzykluszeiten der Teilnehmerklassen als binäre Vielfache einer Basiszykluszeit gewählt und die Sendezeitintervalle entsprechend innerhalb der Teilnehmerzyklusintervalls angeordnet werden.

Solche und weitere der systematischen Umsetzung des Prinzips der Erfindung dienende Festlegungen gehen teilweise damit einher bzw. werden dadurch unterstützt, dass die Teilnehmerzyklusintervalle aller an einem Datenbus vertretenen Teilnehmer zu mindestens einem globalen Synchronisationszeitpunkt synchron beginnen.

Ebenso kann es zur systematischen Umsetzung des Prinzips vorteilhaft sein, ein festes Verhältnis der Länge des Sendezeitintervalls und des Applikationszeitintervalls untereinander bzw. bezogen auf das Teilnehmerzyklusintervall festzulegen.

Durch die Entkopplung von Sendezeiten und Applikationszeiten kann prinzipiell jeder Teilnehmer die zeitliche Planung innerhalb des jeweiligen Applikationszeitintervalls selbst vornehmen (lokales Applikations-Scheduling). Im einfachsten Fall wird mit der Aufgabenbearbeitung zum frühestmöglichen Zeitpunkt nach Beginn des Applikationszeitintervalls begonnen. Alternativ kann es vorteilhaft sein, die Aufgabenbearbeitung des Teilnehmers zeitlich so zu planen, dass sie zum spätestmöglichen Zeitpunkt vor Ende des Applikationszeitintervalls endet bzw. dass ein zeitlicher Mindestabstand vom Sendezeitintervall eingehalten wird. Ein Mindestabstand zwischen Sendezeitintervall und Applikationszeitraum könnte auch erreicht werden, wenn abweichend von einer weiter oben getroffenen Voraussetzung ein zeitlicher Abstand zwischen Sendezeitintervall und Applikationszeitintervall eines Teilnehmers vorgesehen würde.

In den Zeichnungen zeigen:
- Fig. 1: einen zeitgesteuerten Datenbus für mehrere Teilnehmer.
- Fig. 2: den durch ein Scheduling-Verfahren nach dem Stand der Technik festgelegten zeitlichen Ablauf von Kommunikation und Aufgabenbearbeitung für drei Teilnehmer eines Datenbusses gemäß Fig. 1.
- Fig. 3: den veränderten zeitlichen Ablauf nach einer Applikationsänderung an einem der Teilnehmer.
- Fig. 4: die erfindungsgemäß festgelegten funktionsbezogenen Zeitintervalle, Sendezeitschlitze und Applikationszeiträume für drei Teilnehmer eines Datenbusses gemäß Fig. 1.
- Fig.5: die erfindungsgemäß festgelegten funktionsbezogenen Zeitintervalle und den veränderten zeitlichen Ablauf nach einer Applikationsänderung an einem der Teilnehmer.
- Fig. 6: die erfindungsgemäß festgelegten funktionsbezogenen Zeitintervalle und den veränderten zeitlichen Ablauf nach einer Änderung der Kommunikation zwischen zwei Teilnehmern.
- Fig. 7: einen zeitlichen Ablauf für den gemeinsamen Einsatz von nach dem Stand der Technik konzipierten Teilnehmern und erfindungsgemäß konzipierten Teilnehmern in einem Bussystem.
- Fig.8: die für eine bevorzugte Ausführungsform der Erfindung festgelegten funktionsbezogenen Zeitintervalle einiger Teilnehmerklassen.
- Fig. 9: verschiedene Möglichkeiten, eine kausale Kette, die über einen zyklischen Wechsel zwischen einem Sendevorgang und der Bearbeitung einer Aufgabe hinausgeht, durch die Festlegung der funktionsbezogenen Zeitintervalle mehrerer logischer Teilnehmer zu berücksichtigen.

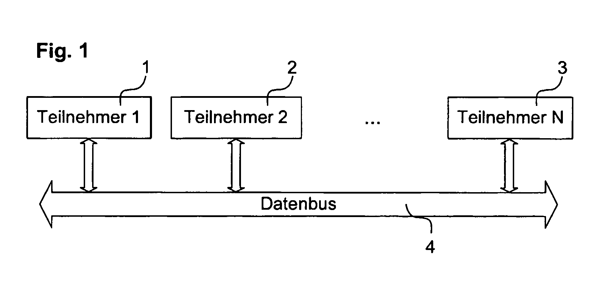

Fig. 1 zeigt schematisch einen zeitgesteuerten Datenbus 4 für mehrere Teilnehmer (Anzahl N). Zunächst wird vorausgesetzt, dass gemäß dem Stand der Technik in einem globalen Scheduling-Verfahren für jeden Teilnehmer feste Sendezeitschlitze und darauf abgestimmte Applikationszeiträume vergeben werden.

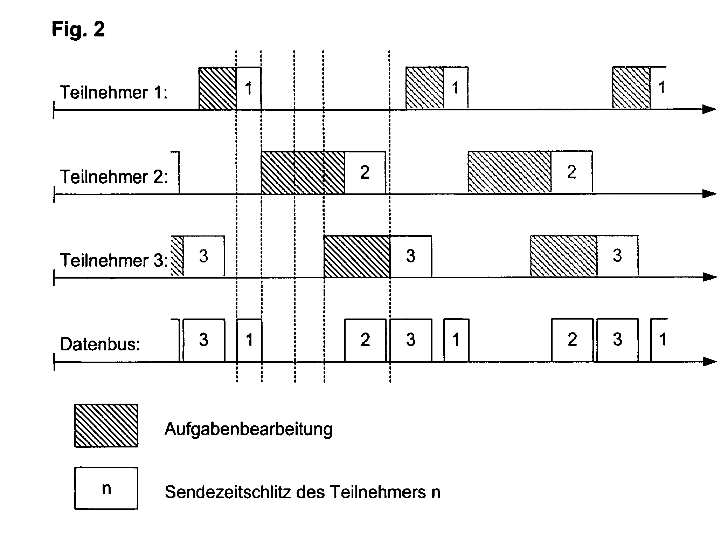

Fig. 2 zeigt beispielhaft einen nach dem Stand der Technik festgelegten zeitlichen Ablauf von Kommunikation und Aufgabenbearbeitung für drei Teilnehmer eines Datenbusses 4 gemäß Fig. 1. Es wird vorausgesetzt, dass Teilnehmer 1 und Teilnehmer 2 kausal miteinander verknüpft sind. Gemäß dem Stand der Technik schlägt sich dieser Zusammenhang in einer engen Verzahnung von Sendezeitschlitzen und Applikationszeiträumen nieder. Etwa endet die Aufgabenbearbeitung des Teilnehmers 1 unmittelbar vor den Sendezeitschlitzen des Teilnehmers 1, die Aufgabenbearbeitung des Teilnehmers 2 beginnt unmittelbar danach.

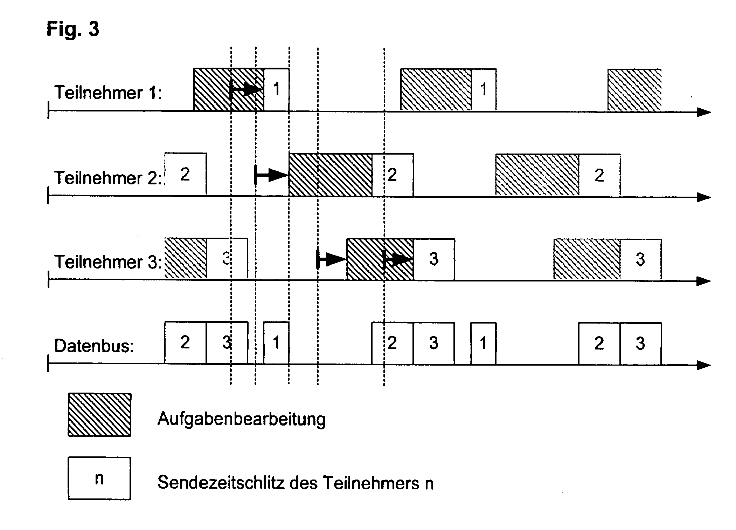

Fig. 3 zeigt den veränderten zeitlichen Ablauf nach einer Applikationsänderung an einem der Teilnehmer, hier Teilnehmer 1. Die Verlängerung des Applikationszeitraumes von Teilnehmer 1 gegenüber Fig. 2 führt dazu, dass die darauffolgende Nachricht nicht mehr in den bisherigen Sendezeitschlitzen gesendet werden kann. Die Sendezeitschlitze des Teilnehmers 1 müssen daher verschoben werden. Der Teilnehmer 1 muss wegen der Applikationsänderung neu konfiguriert und zertifiziert werden.

Da die von Teilnehmer 1 gesendeten Daten nun später bei Teilnehmer 2 zur Verfügung stehen, kann auch die Aufgabenbearbeitung des Teilnehmers 2 nicht zum bisherigen Zeitpunkt gestartet werden. Die Aufgabenbearbeitung des Teilnehmers 2 muss somit später als bisher gestartet werden. Das hierdurch verursachte spätere Ende der Aufgabenbearbeitung des Teilnehmers 2 bedingt, dass die von Teilnehmer 2 zu versendenden Daten zu Beginn der bisherigen Sendezeitschlitze nicht zur Verfügung stehen. Die Sendezeitschlitze des Teilnehmers 2 müssen daher verschoben werden. Der Teilnehmer 2 muss wegen des veränderten Applikationszeitraums neu konfiguriert und zertifiziert werden.

Um weitere, hier nicht dargestellte, funktionale Abhängigkeiten nicht zu gefährden, werden die Sendezeitschlitze des Teilnehmers 2 nur geringfügig nach hinten verschoben. Die Sendezeitschlitze, die dadurch von Teilnehmer 2 benötigt werden, wurden gemäß Fig. 2 aber zum Teil von Teilnehmer 3 genutzt. Daher müssen auch die Sendezeitschlitze des Teilnehmers 3 verschoben werden. Da die Aufgabenbearbeitung des Teilnehmers 3 zeitlich auf die Sendezeitschlitze des Teilnehmers 3 abgestimmt ist, verschiebt sich auch der Zeitraum der Aufgabenbearbeitung des Teilnehmers 3. Auch der Teilnehmer 3 muss wegen des veränderten Applikationszeitraums neu konfiguriert und zertifiziert werden.

Eine Applikationsänderung in einem einzigen Teilnehmer, hier Teilnehmer 1, wirkt sich durch die enge Verzahnung von Sendezeitschlitzen und Applikationszeiträumen nach dem Stand der Technik also auf die Applikationszeiträume mehrerer weiterer Teilnehmer aus, hier sind dies die Teilnehmer 2 und 3. Durch die Änderungen wird im Beispiel nicht nur für Teilnehmer 1, sondern auch für die Teilnehmer 2 und 3 ein Zertifizierungsprozess notwendig.

In vergleichbarer Art und Weise würde sich beispielsweise auch eine Verlängerung der Sendezeitschlitze des Teilnehmers 1 auswirken.

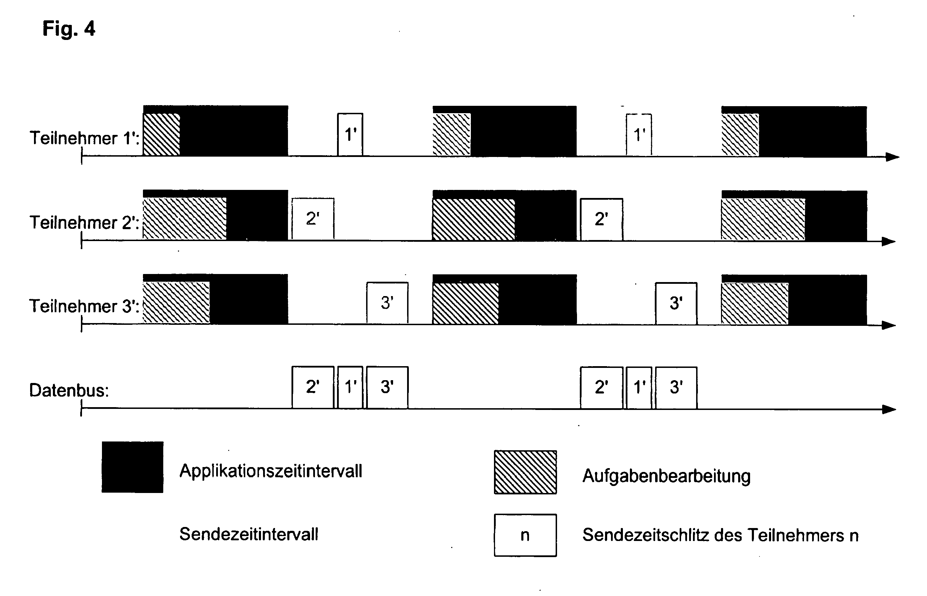

Fig. 4 zeigt ein Busdiagramm, welches sowohl die erfindungsgemäßen Sendezeitintervalle und Applikationszeitintervalle als auch die erfindungsgemäß im Scheduling festgelegten Sendezeitschlitze und Applikationszeiträume für drei Teilnehmer 1', 2', 3' eines zeitgesteuerten Datenbusses 4' enthält. Die funktionsbezogenen Zeitintervalle sind dabei als Teil der Schnittstelle zu verstehen, die jeder Teilnehmer dem globalen Sendezeit-Scheduler zur Verfügung stellt, die Sendezeitschlitze als Zuteilung des globalen Sendezeit-Schedulers an die Teilnehmer. Dementsprechend werden die in Fig. 4 beispielhaft eingetragenen Sendezeitschlitze innerhalb der jeweiligen Sendezeitintervalle durch den globalen Sendezeit-Scheduler festgelegt. Die Festlegung der Applikationszeiträume innerhalb des dafür vorgesehenen Applikationszeitintervalls erfolgt unabhängig von den festgelegten Sendezeitschlitzen durch den Teilnehmer selbst.

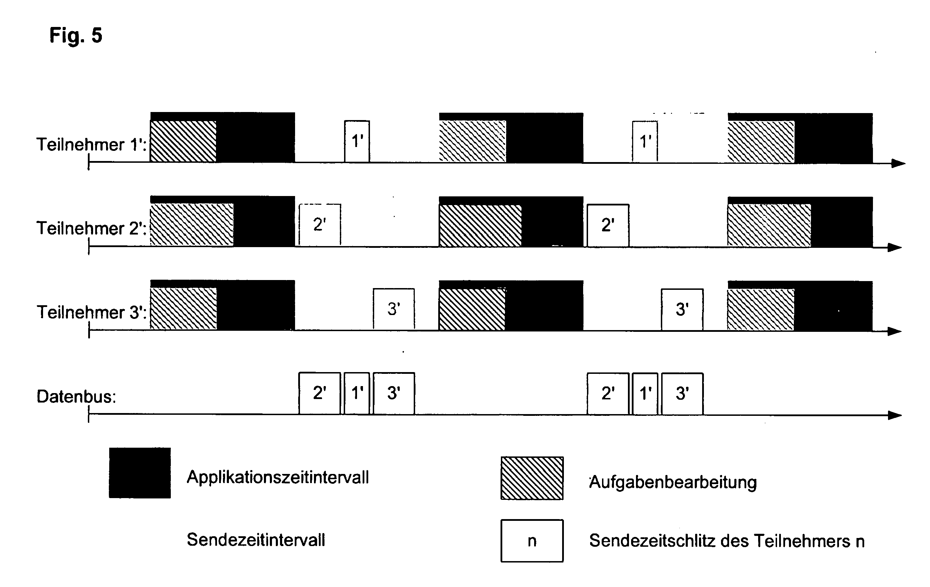

Dieses Vorgehen bietet verschiedene Vorteile, die in Fig. 5, 6 und 7 veranschaulicht werden.

Fig. 5 zeigt ein Busdiagramm, in welchem gegenüber Fig. 4 die Applikation des Teilnehmers 1' verändert wurde. Dementsprechend hat sich der für die Aufgabenbearbeitung benötigte Zeitraum verlängert. Durch die bei der Festlegung der funktionsbezogenen Zeitintervalle vorgesehene zeitliche Reserve, kann die Änderung jedoch innerhalb des Applikationszeitintervalls erfolgen. Lediglich Teilnehmer 1' muss wegen der Applikationsänderung neu konfiguriert und zertifiziert werden. Da Aufgabenbearbeitung und Kommunikation gemäß der Erfindung entkoppelt stattfinden, ist von der Veränderung im Applikations-Scheduling von Teilnehmer 1' kein weiterer Teilnehmer des Datenbusses betroffen. Deshalb muss keiner der anderen Teilnehmer neu konfiguriert und zertifiziert werden.

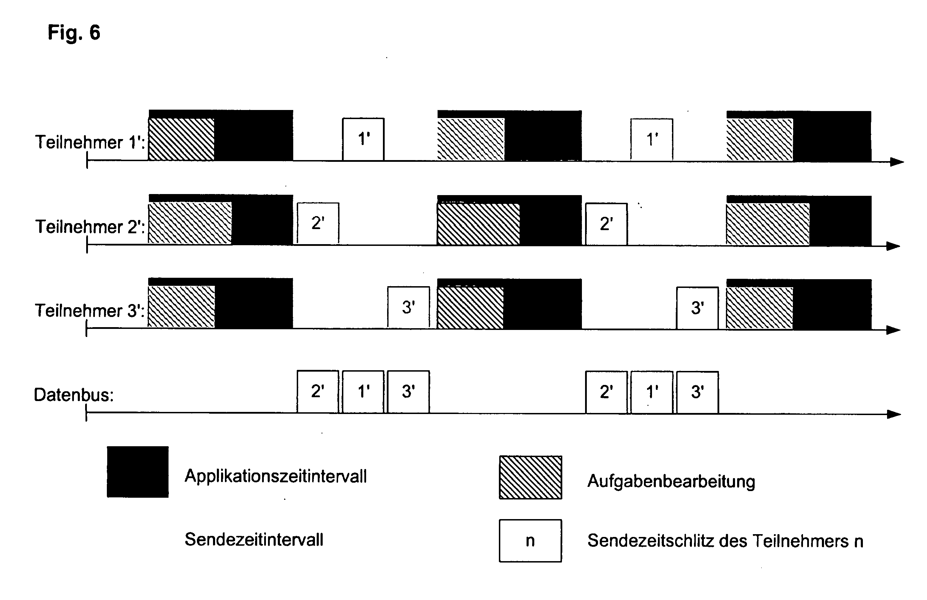

In Fig. 6 ist zusätzlich zum verlängerten Aufgabenbearbeitungszeitraum, der bereits in Fig. 5 berücksichtigt war, eine inhaltliche Änderung der Sendedaten zwischen Teilnehmer 1' und Teilnehmer 2' und infolgedessen eine größere Länge der Sendezeitschlitze für die von Teilnehmer 1' gesendete Nachricht vorgesehen. Durch die veränderten Anforderungen muss die globale Zuteilung von Sendezeitschlitzen in der Planungsphase durch den globalen Sendezeit-Scheduler neu durchgeführt werden. Die neuen Sendezeitschlitze werden den Teilnehmern anschließend in einer Initialisierungsphase mitgeteilt. Da die Sendezeitschlitze auch nach der Änderung noch in den vorgesehenen Sendezeitintervallen liegen, werden hierdurch keine Änderungen der Applikation eines der anderen Teilnehmer notwendig. Da Teilnehmer 2' die inhaltlich veränderten Daten von Teilnehmer 1' verwertet, kann auch eine Änderung der Applikation des Teilnehmers 2' notwendig sein. Die von diesen Daten unabhängige Applikation des Teilnehmers 3' hingegen bleibt unverändert. Teilnehmer 3' muss also nicht neu konfiguriert und somit das entsprechende Steuergerät nicht neu zertifiziert werden.

Fig. 4 und Fig. 6 lassen sich neben den oben diskutierten Beispielen auch zur Veranschaulichung eines weiteren Beispiels für Vorteile der Erfindung heranziehen. Fig. 4 sei zu verstehen als Busdiagramm für den Einsatz des Teilnehmers 3' in einem Bussystem A, welches die Teilnehmer 1' und 2' mit Sende- und Applikationszeiten gemäß Fig. 4 enthält. Wird derselbe Teilnehmer 3' ohne Modifikation in einem Bussystem B eingesetzt, welches die Teilnehmer 1' und 2' mit Sende- und Applikationszeiten gemäß Fig. 6 enthält, kann vom globalen Sendezeit-Scheduler ein alternativer zeitlicher Ablauf, wie beispielhaft im Busdiagramm von Fig. 6 dargestellt, festgelegt werden. Teilnehmer 3' kann also ohne Modifikation in den beiden Netzwerken A und B eingesetzt werden, obwohl sich in beiden Einsatzfällen unterschiedliche zeitliche Abläufe ergeben. Keiner der Teilnehmer muss hierzu neu konfiguriert und somit auch kein Steuergerät neu zertifiziert werden.

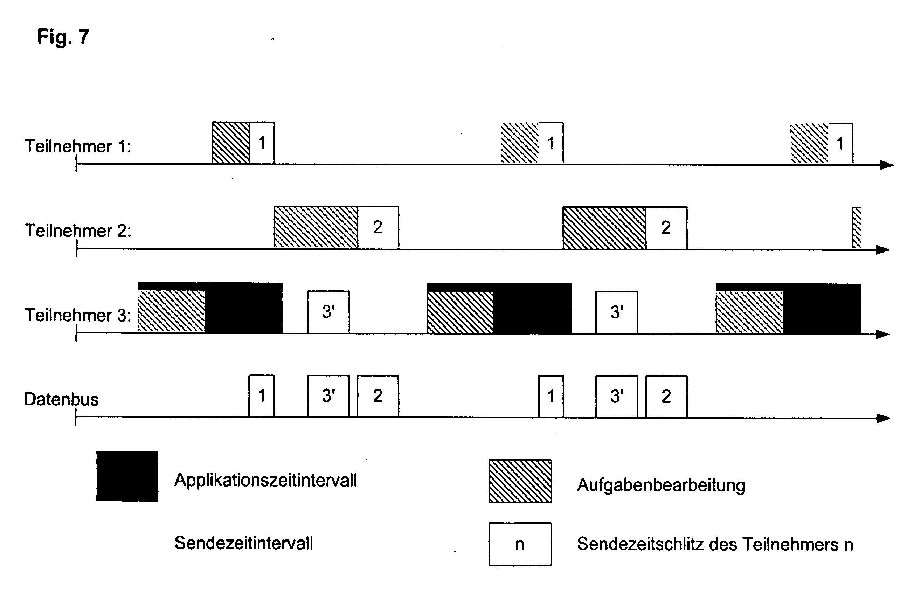

Ein letztes Beispiel für die durch die Erfindung gegenüber dem Stand der Technik flexiblere Einsetzbarkeit von Teilnehmern zeigt Fig. 7. Die Teilnehmer 1 und 2 seien dabei nach dem Stand der Technik konzipiert. Die Kommunikation erfolgt daher in strikt festgelegten Sendezeitschlitzen, die Aufgabenbearbeitung in strikt festgelegten Applikationszeiträumen. Im erfindungsgemäßen Verfahren werden solche Teilnehmer so berücksichtigt, dass das Sendezeitintervall identisch mit den festgelegten Sendezeitschlitzen, das Applikationszeitintervall identisch mit dem festgelegten Applikationszeitraum ist. Das Steuergerät des Teilnehmers 3', der bereits in den Bussystemen A und B gemäß Fig. 4 und 6 eingesetzt wurde, wird nun in einem Bussystem C gemeinsam mit solchen Teilnehmern eingesetzt. Sofern die von Teilnehmer 3' zu sendende Nachricht im Sendezeitintervall des Teilnehmers 3' gesendet werden kann, werden ihm in der Planungsphase Sendezeitschlitze in diesem Sendezeitintervall zugeteilt. Der Teilnehmer 3' muss für den Einsatz im Bussystem C also nicht verändert und somit das übergeordnete Steuergerät nicht neu zertifiziert werden.

Im Vergleich hierzu kann ein ebenso nach dem Stand der Technik konzipierter Teilnehmer 3 im Bussystem C nur dann ohne Veränderung gegenüber einem Einsatz in einem anderen Bussystem verwendet werden, wenn seine Kommunikation in diesem anderen Bussystem in Sendezeitschlitzen stattfindet, die auch im Bussystem C noch unbelegt sind. Die Wahrscheinlichkeit hierfür ist wesentlich geringer als die Wahrscheinlichkeit, dass gemäß der Erfindung in einer Planungsphase die benötigten Sendezeitschlitze innerhalb des Sendezeitintervalls eines Teilnehmers zugeteilt werden können. Wird in ein Bussystem, welches nach dem Stand der Technik konzipierte Teilnehmer enthält, mehr als ein Teilnehmer nach dem erfindungsgemäßen Verfahren eingebracht, steigt die Wahrscheinlichkeit einer unveränderten Einsetzbarkeit für jeden einzelnen erfindungsgemäßen Teilnehmer gegenüber dem Beispiel in Fig. 7 infolge der kombinierten Flexibilität mehrerer Teilnehmer weiter an.

Die bisher angeführten Beispiele sind zu Gunsten einer leichten Verständlichkeit bewusst einfach gehalten. Deshalb gilt für alle Teilnehmer in den bisher angeführten Beispielen die gleiche Teilnehmerzykluszeit. Orientiert an den Anforderungen der Teilnehmer ermöglicht das erfindungsgemäße Verfahren jedoch unterschiedliche Teilnehmerzykluszeiten. Dies ist insbesondere deshalb von Vorteil, da durch die Auflösung der engen zeitlichen Verzahnung von Sendezeitschlitzen und Applikationszeiträumen häufig Totzeiten in kausale Abfolgen eingebracht werden. Durch eine entsprechende Wahl der Teilnehmerzykluszeit können diese Totzeiten jedoch in aus funktionaler Sicht tolerierbaren Grenzen gehalten werden.

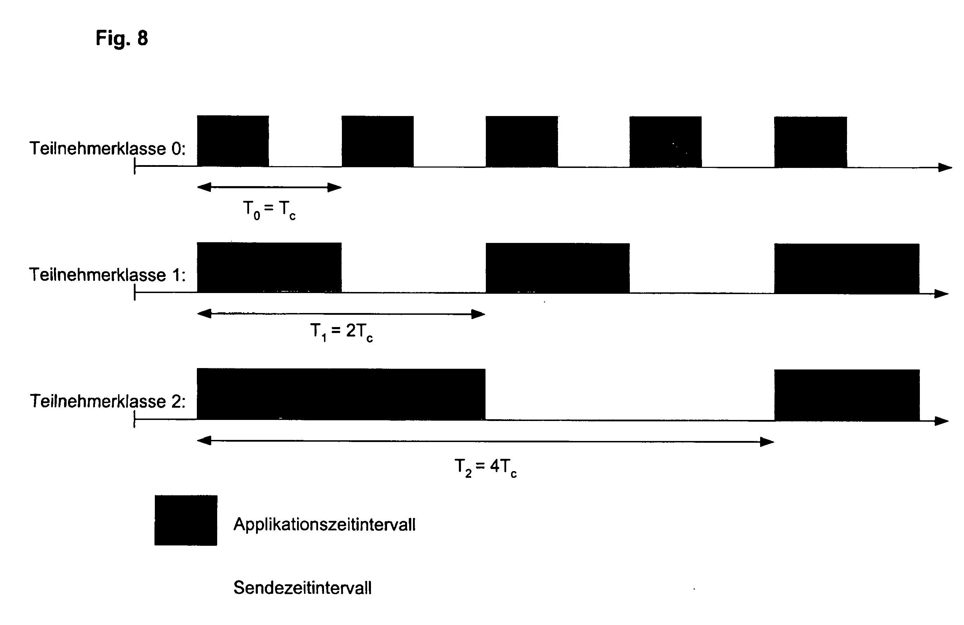

Die Kompatibilität zertifizierter Steuergeräte wird begünstigt, wenn die vertretenen Teilnehmerzykluszeiten nicht beliebig, sondern wertediskret festgelegt werden. Orientiert an den verwendeten Werten lassen sich dann Teilnehmerklassen definieren. Fig. 8 zeigt die funktionsbezogenen Zeitintervalle für mehrere Teilnehmerklassen einer bevorzugten Ausführungsform der Erfindung, in welcher die möglichen Teilnehmerzykluszeiten als binäre Vielfache einer Basiszykluszeit TC festgelegt sind. Die Basiszykluszeit TC ist bei solcher Festlegung gleichzeitig die kleinste verwendete Teilnehmerzykluszeit T0. Somit kann, wenn in einem Bussystem auch Bruchteile der Buszykluszeit als Teilnehmerzykluszeiten verwendet werden, die Basiszykluszeit auch kleiner als die Buszykluszeit sein.

In einer bevorzugten Ausführungsform der Erfindung (Anwendung auf FlexRay) wird die halbe Buszykluszeit als Basiszykluszeit verwendet. Diese Untergrenze ist dadurch begründet, dass jedes Buszyklusintervall ein dynamisches Segment enthält, in welchem ereignisgesteuerte Kommunikationsanforderungen erfüllt werden können. Zunächst wird bei der Festlegung von Sendezeitintervallen auch das dynamische Segment belegt. Überlappen die Sendezeitintervalle der Teilnehmer jedoch nur teilweise mit dem dynamischen Segment des Buszyklusintervalls, können bei Vorhandensein entsprechender Reserven in der Busauslastung zyklische Kommunikationsanforderungen vom globalen Sendezeit-Scheduler weitestgehend außerhalb des dynamischen Segments eingeplant werden. Wenn also vermieden werden kann, dass einzelne Sendezeitintervalle komplett im dynamischen Segment des Buszyklusintervalls liegen, bleibt das dynamische Segment weiter größtenteils für ereignisgesteuerte Kommunikationsanforderungen verfügbar. Bei Verwendung der halben Buszykluszeit als kleinste Teilnehmerzykluszeit ist eine Festlegung von funktionsbezogenen Zeitintervallen möglich, die dies garantiert.

Werden in einem Bussystem verschiedene Teilnehmerzykluszeiten verwendet, so ist als zeitlicher Bezugsbereich des globalen Sendezeit-Schedulers ein Zeitintervall zu verwenden, innerhalb dessen alle Nachrichten eine ganzzahlige Anzahl von Wiederholungen erfahren. Dieses Intervall wird hier Buszuteilungsintervall genannt. Die Länge des kleinsten möglichen Buszuteilungsintervalls ist das mathematisch definierte kleinste gemeinsame Vielfache aller verwendeten Teilnehmerzykluszeiten. Werden entsprechend einer bereits erwähnten bevorzugten Ausführungsform der Erfindung binäre Vielfache einer Basiszykluszeit als Teilnehmerzykluszeiten verwendet, so hat das kleinste rechnerisch festlegbare Buszuteilungsintervall die Länge des größten verwendeten Teilnehmerzyklusintervalls. Infolge von Systemstandards kann das Buszuteilungsintervall auch auf eine bestimmte Anzahl von Buszyklusintervallen festgelegt sein. Der Festlegung von Teilnehmerzykluszeiten ist durch diese Festlegung gleichermaßen eine Obergrenze gesetzt.

In den bisher angeführten Beispielen wurde zu Gunsten leichterer Verständlichkeit implizit vorausgesetzt, dass die Sendezeitintervalle die gleiche Länge besitzen wie die Applikationszeitintervalle. Das Größenverhältnis der Zeitintervalle zueinander kann jedoch beliebig angepasst werden, sofern die eingangs genannten Bedingungen für die Festlegung von funktionsbezogenen Zeitintervallen erfüllt sind. Da das Sendezeitintervall Teil der nach außen dargestellten Schnittstelle eines Teilnehmers ist, ist es neben der Teilnehmerzykluszeit in der Festlegung von Teilnehmerklassen zu berücksichtigen.

In einer bevorzugten Ausführungsform der Erfindung wird das Größenverhältnis der funktionsbezogenen Zeitintervalle zueinander festgelegt als das statistisch ermittelte Verhältnis zwischen den in realen Bussystemen zur Kommunikation und Aufgabenbearbeitung benötigten Zeiten. Leichte Abweichungen von diesem Verhältnis sind bedingt durch eine Quantisierung als Folge der Unterteilung des Teilnehmerzyklusintervalls in Sendezeitschlitze.

Ebenso wurde bisher zu Gunsten einer leichten Verständlichkeit des Prinzips der Erfindung davon ausgegangen, dass in einem Teilnehmerzyklusintervall genau ein Sendezeitintervall und ein Applikationszeitintervall enthalten sind, dass die Vereinigungsmenge beider Zeitintervalle das gesamte Teilnehmerzyklusintervall überspannt und dass eines der Zeitintervalle synchron mit einem globalen Synchronisationszeitpunkt beginnt. Um kompliziertere kausale Abhängigkeiten berücksichtigen zu können, lässt sich das Prinzip der Erfindung jedoch auch auf kompliziertere, von diesen Regeln abweichende Konstrukte von Zeitintervallen innerhalb eines Teilnehmerzyklusintervalls erweitern. Einerseits können in einem Teilnehmerzyklusintervall beliebig viele Sendezeitintervalle und beliebig viele Applikationszeitintervalle vorgesehen werden. Andererseits muss die Vereinigungsmenge der Zeitintervalle nicht notwendigerweise das gesamte Teilnehmerzyklusintervall überspannen. Ebenso können sämtliche Zeitintervalle mit beliebiger zeitlicher Verschiebung zu einem globalen Synchronisationszeitpunkt beginnen und sich über die Grenze zwischen mehreren Teilnehmerzyklusintervallen hinweg erstrecken. Die Verwendbarkeit von Teilnehmern in unterschiedlichen Bussystemen wird jedoch begünstigt, wenn nur eine beschränkte Anzahl verschiedener Zeitintervall-Konstrukte Verwendung findet. Für diese Anzahl von Varianten kann dann jeweils eine entsprechende Teilnehmerklasse definiert werden.

Innerhalb eines Steuergerätes ablaufende kausale Ketten, die über einen zyklischen Wechsel zwischen einem Sendevorgang und der Bearbeitung einer Aufgabe hinausgehen, können auch ohne die Verwendung von Zeitintervall-Konstrukten, die mehr als je ein Sendezeitintervall und ein Applikationszeitintervall enthalten, erfindungsgemäß durch' die Festlegung von Zeitintervallen berücksichtigt werden. Zum einen kann eine solche kausale Kette auf mehrere logische Teilnehmer mit je einem Sendezeitintervall und einem Applikationszeitintervall verteilt werden, wobei die Zykluszeit der kausalen Kette als Teilnehmerzykluszeit verwendet wird und die Vereinigungsmenge des Sendezeitintervalls und des Applikationszeitintervalls eines einzelnen logischen Teilnehmers nicht das gesamte Teilnehmerzyklusintervall überspannt. Zum anderen kann eine solche kausale Kette auf mehrere logische Teilnehmer mit je einem Sendezeitintervall und einem Applikationszeitintervall verteilt werden, wobei ein Bruchteil der Zykluszeit der kausalen Kette als Teilnehmerzykluszeit verwendet wird und die Vereinigungsmenge des Sendezeitintervalls und des Applikationszeitintervalls eines einzelnen logischen Teilnehmers das gesamte Teilnehmerzyklusintervall überspannt. Wird die zuletzt genannte Ausführungsform der Erfindung gewählt, besteht eine erste Umsetzungsmöglichkeit darin, die funktionsbezogenen Zeitintervalle zwar fest in der Schnittstelle des logischen Teilnehmers vorzusehen, sie aber gesteuert durch zusätzliche Informationen der logischen Teilnehmer nur in ausgewählten Teilnehmerzyklusintervallen in Anspruch zu nehmen. Eine zweite Umsetzungsmöglichkeit besteht darin, aufeinanderfolgende kausale Ketten nicht nacheinander, sondern zeitlich überlappend ablaufen zu lassen. In diesem Fall muss im lokalen Applikations-Scheduling jedoch sichergestellt werden, dass sich die Applikationszeiträume verschiedener logischer Teilnehmer nicht überlappen.

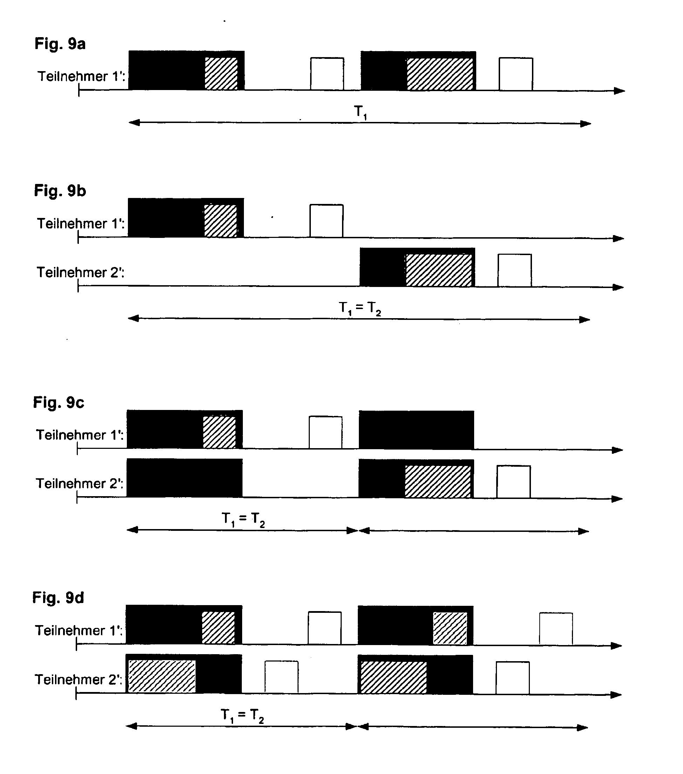

Fig. 9a, 9b, 9c und 9d zeigen verschiedene Möglichkeiten zur Definition von funktionsbezogenen Zeitintervallen für die Umsetzung einer exemplarischen kausalen Kette innerhalb eines Steuergerätes. In Fig. 9a wird ein Zeitintervall-Konstrukt mit mehr als einem Sendezeitintervall und mehr als einem Applikationszeitintervall gewählt. In Fig. 9b wird die kausale Kette auf zwei logische Teilnehmer mit je einem Sendezeitintervall und einem Applikationszeitintervall verteilt, wobei die Vereinigungsmenge der Zeitintervalle nicht das gesamte Teilnehmerzyklusintervall überspannt. In Fig. 9c wird bei beiden logischen Teilnehmern eine kürzere Teilnehmerzykluszeit gewählt, wobei nicht in jedem Teilnehmerzyklusintervall alle Zeitintervalle in Anspruch genommen werden. In Fig. 9d werden alle Zeitintervalle in Anspruch genommen, wodurch aufeinanderfolgende kausale Ketten überlappen.

## Patentansprüche

1. Verfahren zur Durchführung einer zyklischen und konfliktfreien Datenkommunikation der Teilnehmer (1, 2, 3) eines Datenbusses (4) die in nicht überlappenden Zeiträumen innerhalb eines Teilnehmerzyklusintervalls Daten senden und Aufgaben bearbeiten, und denen in einer Planungsphase feste Sendezeitschlitze innerhalb des Teilnehmerzyklusintervalls zugeteilt werden, **dadurch gekennzeichnet, dass** die Aufgabenbearbeitung eines Teilnehmers ausschließlich innerhalb eines Applikationszeitintervalls innerhalb des Teilnehmerzyklusintervalls durchgeführt wird, in der Planungsphase die Sendezeitschlitze jedes Teilnehmers (1, 2, 3) innerhalb eines zum Applikationszeitintervall - disjunkten Sendezeitintervalls innerhalb des Teilnehmerzyklusintervalls gewählt werden und die gewählten Sendezeitschlitze den Teihehmern (1, 2, 3) in einer nachfolgenden Initialisierungsphase mitgeteilt werden.

2. Verfahren nach Anspruch 1, **dadurch gekennzeichnet, dass** das Sendezeitintervall eines Teilnehmers größer als die Länge der Sendezeitschlitze gewählt wird.

3. Verfahren nach einem der obigen Ansprüche, **dadurch gekennzeichnet, dass** das Applikationszeitintervall eines Teilnehmers größer als die Dauer der Aufgabenbearbeitung gewählt wird.

4. Verfahren nach einem der obigen Ansprüche, **dadurch gekennzeichnet, dass** für jeden Teilnehmer eine individuelle Teilnehmerzykluszeit gewählt wird.

5. Verfahren nach Anspruch 4, **dadurch gekennzeichnet, dass** ein Teilnehmer orientiert an seiner Teilnehmerzykluszeit und seinem Sendezeitintervall einer Teilnehmerklasse zugeordnet wird.

6. Verfahren nach Anspruch 5, **dadurch gekennzeichnet, dass** die Teilnehmerzykluszeit einer Teilnehmerklasse als binäres Vielfaches einer Basiszykluszeit gewählt wird.

7. Verfahren nach einem der Ansprüche 4, 5 oder 6, **dadurch gekennzeichnet, dass** der Beginn der Teilnehmerzyklusintervalle verschiedener Teilnehmer synchron festgelegt wird.

8. Verfahren nach einem der Ansprüche 4, 5, 6 oder 7, **dadurch gekennzeichnet, dass** die Länge des Sendezeitintervalls eines Teilnehmers in einem bestimmten Verhältnis zur Teilnehmerzykluszeit gewählt wird.

9. Verfahren nach einem der Ansprüche 4, 5, 6, 7 oder 8, **dadurch gekennzeichnet, dass** das Sendezeitintervall eines Teilnehmers in einer bestimmten Lage innerhalb des Teilnehmerzyklusintervalls festgelegt wird.

10. Verfahren nach einem der obigen Ansprüche, **dadurch gekennzeichnet, dass** die Aufgabenbearbeitung eines Teilnehmers mit dem Beginn des Applikätionszeitintervalls begonnen wird.

11. Verfahren nach Anspruch 10, **dadurch gekennzeichnet, dass** das Applikationszeitintervall eines Teilnehmers unmittelbar im Anschluss an das Sendezeitintervall festgelegt wird.

12. Verfahren nach einem der Ansprüche 1 bis 9, **dadurch gekennzeichnet, dass** die Aufgabenbearbeitung eines Teilnehmers mit dem Ende des Applikationszeitintervalls beendet wird.

13. Verfahren nach Anspruch 12, **dadurch gekennzeichnet, dass** das Applikationszeitintervall eines Teilnehmers unmittelbar vor dem Sendezeitintervall festgelegt wird.

14. Verfahren nach einem der Ansprüche 1 bis 9, **dadurch gekennzeichnet, dass** das Applikationszeitintervall eines Teilnehmers mit einem zeitlichen Mindestabstand zum Sendezeitintervall festgelegt wird.

15. Verfahren nach einem der Ansprüche 10 oder 12, **dadurch gekennzeichnet, dass** die Aufgabenbearbeitung eines Teilnehmers mit einem zeitlichen Mindestabstand von Beginn und Ende des Applikationszeitintervalls durchgeführt wird.

## Claims

1. A method of cyclic conflict-free communication of data between subscribers (1, 2, 3) on a data bus (4), the subscribers transmitting data and working on jobs in non-overlapping stretches of time within a subscriber cycle interval and being supplied during a planning phase with fixed transmission time slots within the subscriber cycle interval, **characterised in that** the work on jobs by a subscriber is performed exclusively in an application time interval within the subscriber cycle interval, during the planning phase the transmission time slots for each subscriber (1, 2, 3) are chosen within a transmission time interval separate from the application time interval and within the subscriber cycle interval, and the chosen transmission time slots are assigned to the subscribers (1, 2, 3) during a subsequent initialisation phase.

2. A method according to claim 1, **characterised in that** the transmission time interval chosen for a subscriber is longer than the transmission time slots.

3. A method according to one of the preceding claims, **characterised in that** the application time interval chosen for a subscriber lasts longer than the work on jobs.

4. A method according to any of the preceding claims, **characterised in that** an individual subscriber cycle time is chosen for each subscriber.

5. A method according to claim 4, **characterised in that** a subscriber is allocated a class in accordance with his cycle time and his transmission time interval.

6. A method according to claim 5, **characterised in that** the cycle time in a class is chosen in the form of a binary multiple of a basic cycle time.

7. A method according to any of claims 4, 5 or 6, **characterised in that** the beginning of the subscriber cycle intervals for various subscribers is fixed in synchronism.

8. A method according to any of claims 4, 5, 6 or 7, **characterised in that** the length of a subscriber's transmission time interval is chosen in a given proportion to the subscriber's cycle time.

9. A method according to any of claims 4, 5, 6, 7 or 8, **characterised in that** a subscriber's transmission time interval is fixed in a given position within the subscriber's cycle interval.

10. A method according to any of the preceding claims, **characterised in that** a subscriber's work on a job begins at the same time as the application time interval begins.

11. A method according to claim 10, **characterised in that** a subscriber's application time interval is fixed directly after the transmission time interval.

12. A method according to any of claims 1 to 9, **characterised in that** a subscriber's work on a job ends at the same time as the application time interval ends.

13. A method according to claim 12, **characterised in that** a subscriber's application time interval is fixed immediately before the transmission time interval.

14. A method according to any of claims 1 to 9, **characterised in that** a subscriber's application time interval is fixed at a minimum distance in time from the transmission time interval.

15. A method according to any of claims 10 to 12, **characterised in that** a subscriber's work on a job is performed at a minimum distance in time from the beginning and the end of the application time interval.

## Revendications

1. Procédé pour effectuer une communication cyclique et sans conflit de données entre un participant (1, 2, 3) à un bus de données (4) envoyant des données dans des périodes sans chevauchement à l'intérieur d'un intervalle de cycles de participants et traitant des tâches et auxquelles sont attribuées des fenêtres de temps d'émission fixe dans une phase de planification, à l'intérieur de l'intervalle du cycle de participants,
**caractérisé en ce que**
le traitement des tâches d'un participant est effectué exclusivement à l'intérieur d'un intervalle d'application dans un intervalle de cycle de participants, les fenêtres d'émission de chaque participant (1, 2, 3) étant choisies dans la phase de planification, à l'intérieur d'un intervalle de temps d'émission disjoint de l'intervalle de temps d'application dans l'intervalle de cycle de participants et les fenêtres d'émission sont communiquées aux participants (1, 2, 3) au cours d'une phase d'initialisation suivante.

2. Procédé selon la revendication 1,
**caractérisé en ce que**
l'intervalle de temps d'émission d'un participant est choisi supérieur à la durée de la fenêtre d'émission.

3. Procédé selon l'une des revendications précédentes,
**caractérisé en ce que**
l'intervalle de temps d'application d'un participant est choisi supérieur à la durée du traitement de la tâche.

4. Procédé selon l'une des revendications précédentes,
**caractérisé en ce qu'**
on choisit un temps de cycle de participants individuel pour chaque participant.

5. Procédé selon la revendication 4,
**caractérisé en ce qu'**
un participant est associé de manière orientée à son temps de cycle de participant et à son intervalle de temps d'émission d'une classe de participants.

6. Procédé selon la revendication 5,
**caractérisé en ce que**
le temps du cycle de participant d'une classe de participants est choisi comme un multiple binaire d'un temps de cycle de base.

7. Procédé selon l'une des revendications 4, 5 ou 6,
**caractérisé en ce qu'**
on fixe en synchronisme le début des intervalles de cycles de participant des différents participants.

8. Procédé selon l'une des revendications 4, 5, 6 ou 7,
**caractérisé en ce qu'**
on choisit la longueur de l'intervalle de temps d'émission d'un participant dans un certain rapport au temps du cycle de participant.

9. Procédé selon l'une des revendications 4, 5, 6, 7 ou 8,
**caractérisé en ce qu'**
on fixe l'intervalle de temps d'émission d'un participant dans une position déterminée à l'intérieur de l'intervalle de cycle de participant.

10. Procédé selon l'une des revendications précédentes,
**caractérisé en ce que**
le traitement de la tâche d'un participant commence par le début de l'intervalle de temps d'application.

11. Procédé selon la revendication 10,
**caractérisé en ce qu'**
on fixe l'intervalle de temps d'application d'un participant directement à la suite de l'intervalle de temps d'émission.

12. Procédé selon l'une des revendications 1 à 9,
**caractérisé en ce que**
le traitement de la tâche d'un participant se termine avec la fin de l'intervalle de temps d'application.

13. Procédé selon la revendication 12,
**caractérisé en ce que**
l'intervalle de temps d'application d'un participant est fixé directement avant l'intervalle de temps d'émission.

14. Procédé selon l'une des revendications 1 à 9,
**caractérisé en ce que**
l'intervalle de temps d'application d'un participant est fixé avec un intervalle de temps minimum par rapport à l'intervalle de temps d'émission.

15. Procédé selon l'une des revendications 10 ou 12,
**caractérisé en ce que**
le traitement de la tâche d'un participant est effectué avec un intervalle de temps minimum par rapport au début et à la fin de l'intervalle de temps d'application.
